# EUROPÄISCHE PATENTANMELDUNG

(11) **EP 4 670 488 A1**
(43) Veröffentlichungstag der Anmeldung: **31.12.2025**
(21) Anmeldenummer: 25176382.7
(22) Anmeldetag: 14.05.2025
(51) Int. Cl.: A01D 61/00

(54) **SCHRÄGFÖRDERER FÜR EINE SELBSTFAHRENDE ERNTEMASCHINE**

(30) Priorität: 25.06.2024 DE 102024117863
(71) Anmelder: CLAAS Selbstfahrende Erntemaschinen GmbH, 33428 Harsewinkel (DE)
(72) Erfinder: Kortenjann, Ludger, 48231 Warendorf (DE)
(74) Vertreter: CLAAS Gruppe

(57) **Zusammenfassung**

Die Erfindung betrifft einen Schrägförderer (2) für eine selbstfahrende Erntemaschine (1) mit zumindest zwei vorderen Umlenkrollen (3) und zumindest zwei hinteren Antriebsrollen (4), um welche zumindest zwei parallel verlaufende Zugmittel (5) endlos umlaufen, zwischen denen sich entlang der Länge der Zugmittel (5) verteilte Förderleisten (18) erstrecken, wobei die vorderen Umlenkrollen (3) auf einer Umlenkwelle (23) und die hinteren Antriebsrollen (4) auf einer Antriebswelle (21) angeordnet sind, wobei zumindest die Umlenkwelle (23) an dessen äußeren Enden (24) jeweils an einem Tragarm (22) gelagert ist, wobei der jeweilige Tragarm (22) an einem der Umlenkwelle (23) abgewandten Ende (29) mittels jeweils eines Gelenkauges (28) gelagert ist.

## Beschreibung

Die Erfindung betrifft einen Schrägförderer für eine selbstfahrende Erntemaschine gemäß dem Oberbegriff des Anspruches 1.

Mit einem an einer selbstfahrenden Erntemaschine angeordneten Vorsatzgerät geerntetes Erntegut wird mittels eines Schrägförderers in eine selbstfahrende Erntemaschine, beispielsweise einen Mähdrescher, gefördert, und dann dort verarbeitet.

Aus der DE 10 2018 112 047 A1 ist ein Schrägförderer gemäß dem Oberbegriff des Anspruchs 1 bekannt. Der dort beschrieben Schrägförderer umfasst vier parallel zueinander verlaufende als Riemen ausgebildete Zugmittel, die jeweils zwischen einer vorderen Umlenkrolle und einer hinteren Antriebsrolle eingespannt sind und endlos umlaufen. Entlang der Länge der Riemen sind eine Mehrzahl von Förderleisten angeordnet, die jeweils zwei der Riemen überdecken und mit diesen verbunden sind. Die Umlenkrollen sind beabstandet zueinander auf einer Umlenkwelle angeordnet und die Antriebsrollen sind beabstandet zueinander auf einer Antriebswelle angeordnet. Üblicherweise ist die Umlenkwelle mittels zweier Tragarme an einem Gehäuse des Schrägförderers gehaltert. Hierfür ist die Umlenkwelle an ihren äußeren Enden an den Tragarmen gelagert, wobei die Tragarme wiederum jeweils an einer Seitenwand des Gehäuses gelagert sind. Aufgrund unterschiedlicher Ernte- und Gutflussbedingungen kann die Umlenkwelle einseitig ansteigen. Ein einseitiges Ansteigen kann zu einer Verspannung der Umlenkwelle und zu zusätzlichen Belastungen der Lager führen. Diese Belastungen bewirken zusätzlichen Verschleiß und führen zu einer geminderten Lebensdauer der Lager.

Es ist deshalb Aufgabe der Erfindung, die beschriebenen Nachteile des Standes der Technik zu vermeiden und insbesondere eine verbesserte Anordnung der Umlenkwelle in einem Schrägförderer zu schaffen.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Schrägförderer für eine selbstfahrende Erntemaschine vorgeschlagen, mit zumindest zwei vorderen Umlenkrollen und zumindest zwei hinteren Antriebsrollen, um welche zumindest zwei parallel verlaufende Zugmittel endlos umlaufen, zwischen denen sich entlang der Länge der Zugmittel verteilte Leisten erstrecken, wobei die vorderen Umlenkrollen auf einer Umlenkwelle und die hinteren Antriebsrollen auf einer Antriebswelle angeordnet sind, wobei zumindest die Umlenkwelle an dessen äußeren Enden jeweils an einem Tragarm gelagert ist, wobei der jeweilige Tragarm an einem der Umlenkwelle abgewandten Ende mittels jeweils eines Gelenkauges gelagert ist. Das Gelenkauge ermöglicht dem Tragarm neben einer Drehbewegung um eine Rotationsachse, zusätzlich eine Kippbewegung auszuführen. Mithin kann in Erntesituationen, bei der am Zuführende des Schrägförderers eine ungleichmäßige Erntegutzufuhr auftritt und die Umlenkwelle einseitig ansteigt, durch die Kippbewegung des Tragarms ein Verspannen der Lager vermieden werden. Die so geschaffene robuste Anordnung der Umlenkwelle reduziert den an den Lagern zur Lagerung der Umlenkwelle auftretenden Verschleiß erheblich.

Eine vorteilhafte Weiterbildung sieht vor, dass das jeweilige Gelenkauge einen Innenring und einen Außenring umfasst, wobei eine Außenfläche des Innenrings und eine Innenfläche des Außenrings kugelförmig ausgebildet sind und aufeinander gleitende Gleitflächen ausbilden. Dadurch, dass die Innenfläche und die Außenfläche kugelförmig ausgebildet sein können, ist neben einer Drehbewegung um eine Drehachse, zu der sich der Innenring konzentrisch erstreckt, zusätzlich der Außenring relativ zu den Innenring um eine orthogonal auf der Drehachse stehende Kippachse verschwenkbar.

Eine vorteilhafte Weiterbildung sieht vor, dass der jeweilige Tragarm an dem der Umlenkwelle abgewandten Ende eine Lasche ausbildet, wobei die Lasche eine Aussparung umfasst, wobei in der Aussparung der Außenring des jeweiligen Gelenkauges gehaltert ist. Hierdurch kann das jeweilige Gelenkauge auf besonders einfache Art und Weise von dem jeweiligen Tragarm gehaltert werden.

Um die Umlenkwelle mittels der Tragarme zu Lagern, ist es besonders vorteilhaft, wenn der Schrägförderer ein Gehäuse mit einander gegenüberliegenden Seitenwänden umfasst, wobei die jeweiligen Tragarme mittels des jeweiligen Gelenkauges an den Seitenwänden angeordnet sind, wobei vorzugsweise jeweils ein Bolzen ortsfest an der jeweiligen Seitenwand angeordnet ist und der Innenring des jeweiligen Gelenkauges auf einem der jeweiligen Bolzen angeordnet ist. Weiterhin ist es besonders vorteilhaft, wenn die Umlenkwelle mittels jeweils eines Rillenkugellagers an dem jeweiligen Tragarm gelagert ist.

Eine vorteilhafte Weiterbildung sieht vor, dass radial außenseitig auf der Umlenkwelle zumindest vier Umlenkrollen zum Umlenken der Zugmittel angeordnet sind und radial außenseitig auf der Antriebswelle zumindest vier Antriebsrollen angeordnet sind.

Eine vorteilhafte Weiterbildung sieht vor, dass die Zugmittel als Ketten oder Riemen ausgeführt sind.

Die vorliegende Erfindung wird nachstehend anhand eines in den Zeichnungen dargestellten Ausführungsbeispiels näher erläutert. Es zeigen:
- Figur 1: eine schematische und exemplarische Darstellung eines selbstfahrenden Mähdreschers in Seitenansicht;
- Figur 2: schematisch und exemplarisch eine perspektivische Ansicht einer innerhalb eines Schrägförderers eines Mähdreschers angeordneten Umlenkwelle mit an der Umlenkwelle angeordneten Tragarmen; und
- Figur 3: schematisch und exemplarisch eine perspektivische Ansicht einer Endseite eines Tragarms gemäß Figur 2.

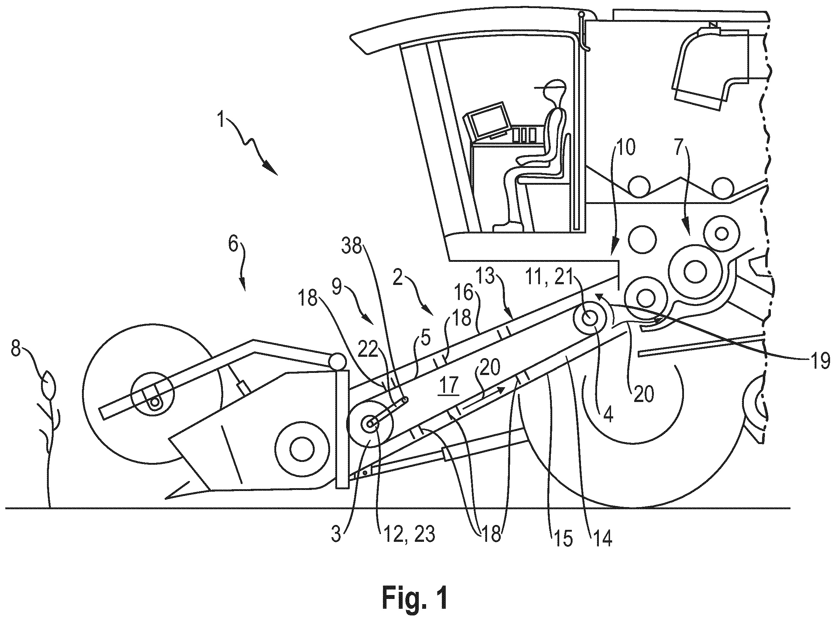

Fig. 1 zeigt schematisch einen Ausschnitt aus einer Anordnung mit einem Schrägförderer 2 und einer selbstfahrenden Erntemaschine 1, hier einem Mähdrescher. Im Folgenden werden die Begriffe Erntemaschine 1 und Mähdrescher synonym verwendet.

Der Schrägförderer 2 ist lösbar an der Erntemaschine 1 angeordnet. Er ist zwischen einem Vorsatzgerät 6 und der Erntemaschine 1 angeordnet. Das Vorsatzgerät 6 ist zum Aufnehmen von Erntegut 8 vorgesehen. Um das Erntegut 8 bodennah abschneiden zu können, ist der Schrägförderer 2 um eine Schwenkachse (nicht gezeigt) schwenkbar an der Erntemaschine angeordnet, so dass das Vorsatzgerät 6 höhenverstellbar ist. Mit dem Schrägförderer 2 wird das Erntegut 8 zu dessen Verarbeitung in die Erntemaschine 1 gefördert. Das Erntegut 8 wird hier in einem Dreschwerk 7 der Erntemaschine 1 verarbeitet.

Der Schrägförderer 2 weist zumindest zwei, vorzugsweise vier Antriebsrollen 4 und diesen zugeordnete Umlenkrollen 3 auf. Die Umlenkrollen 3 sind im Bereich eines Zuführendes 9 des Schrägförderers 2 angeordnet. Am Zuführende 9 ist das Vorsatzgerät 6 am Schrägförderer 2 befestigt. Das vom Vorsatzgerät 6 aufgenommene Erntegut 8 wird am Zuführende 9 in den Schrägförderer 2 eingeführt.

Die Antriebsrollen 4 sind an einem dem Zuführende 9 gegenüberliegenden Abgabeende 10 des Schrägförderers 2 angeordnet, an dem das Erntegut 8 den Schrägförderer 2 verlässt. Das Erntegut gelangt in die Erntemaschine 1, hier in das Dreschwerk 7, zu dessen weiterer Verarbeitung.

Die Antriebsrollen 4 sind jeweils mittels einer sich konzentrisch zu einer Antriebsachse 11 erstreckenden Nabe (nicht dargestellt) drehfest auf einer Antriebswelle 21 angeordnet. Ebenso sind die Umlenkrollen 3 jeweils drehfest auf einer Umlenkwelle 23 angeordnet, die eine Umlenkachse 12 ausbildet. Sowohl die Antriebswelle 21 als auch die Umlenkwelle 23 sind drehbar in einem Gehäuse 13 gelagert. Die im Wesentlichen vertikal verlaufenden Seitenwände 14 des Gehäuses 13 sind durch eine Gehäuseunterwand 15 und eine Gehäuseoberwand 16, die sich zwischen den Gehäuseseitenwänden 14 horizontal zu diesen erstrecken, miteinander verbunden. Gemeinsam begrenzen die Seitenwände 14, die Gehäuseunterwand 15 sowie die Gehäuseoberwand 16 einen insbesondere etwa quaderförmig ausgebildeten Innenraum 17 des Schrägförderers 2. Zum Fördern des Erntegutes 8 sind eine der Anzahl der Antriebsrollen 4 entsprechende Anzahl von Zugmitteln 5, insbesondere Ketten oder Riemen, vorgesehen, welche die jeweilige Antriebsrolle 4 und die zugehörige Umlenkrolle 3 umschlingen. Auf den Zugmitteln 5 sind Förderleisten 18 äquidistant zueinander angeordnet, welche sich parallel zur Antriebsachse 11 erstrecken und der Mitnahme des Erntegutes 8 dienen. Die Förderleisten 18 erstrecken sich zwischen jeweils zwei Zugmitteln 5 und verbinden diese miteinander.

In dem Schrägförderer 2 wird das Erntegut 8 unterschächtig gefördert. Das heißt, dass es entlang der Unterwand 15 gefördert wird. Dafür wird die Antriebswelle 21 in eine Drehrichtung 19 um die Antriebsachse 11 angetrieben. Eine Förderrichtung 20 des Erntegutes 8 ist hier durch zwei Pfeile, einer im Schrägförderer 2 und einer am Abgabeende 10, schematisch gezeigt.

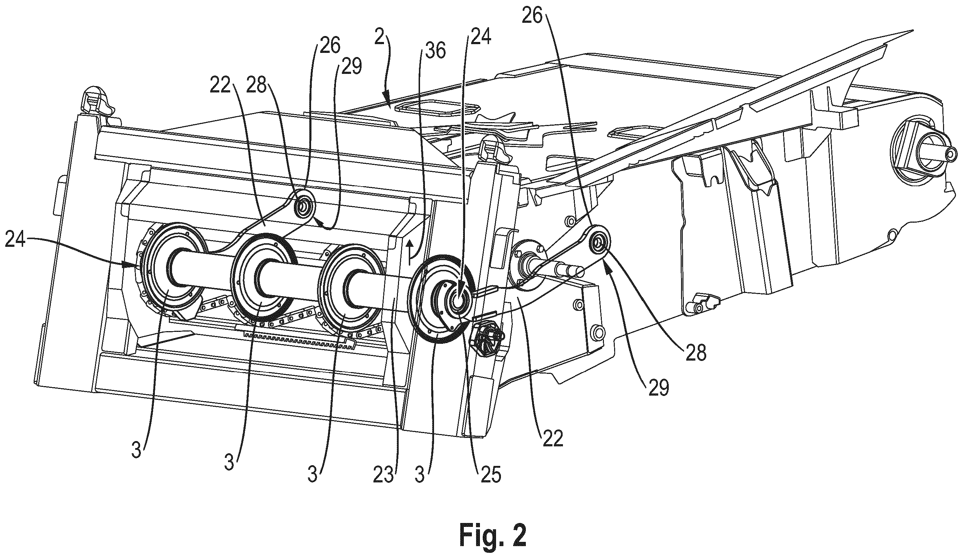

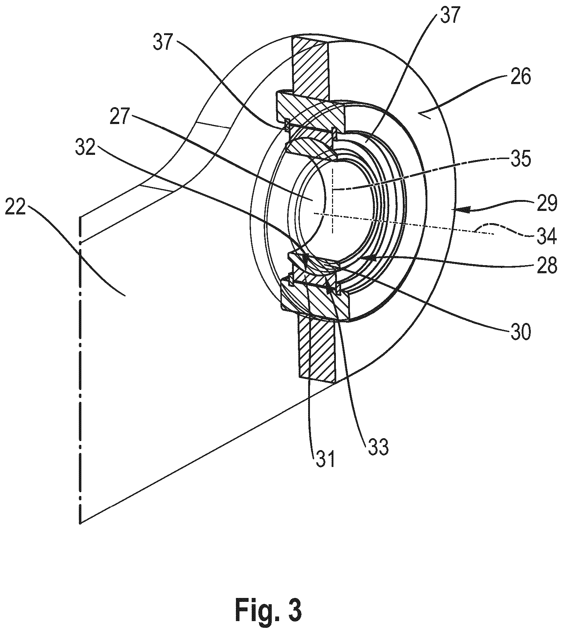

Fig. 2 zeigt die innerhalb des Schrägförderers 2 angeordnete Umlenkwelle 23 mit den darauf angeordneten Umlenkrollen 3 in einer perspektivischen Ansicht. Die Umlenkwelle 23 wird mittels zweier Tragarme 22 gehaltert. Hierfür ist die Umlenkwelle 23 an ihren äußeren Enden 24 jeweils mittels eines Lagers 25, insbesondere eines Rillenkugellagers, an dem jeweiligen Tragarm 22 gelagert. Als äußere Enden 24 der Umlenkwelle 23 sind im Sinne der vorliegenden Anmeldung die den Stirnseiten der Umlenkwelle 23 zugewandten Enden 24 der Umlenkwelle 23 zu verstehen. Die Tragarme 22 sind in nicht näher dargestellter Weise an ihrem freien Ende 29 bzw. an ihrem der Umlenkwelle 23 abgewandten Ende 29, an den Seitenwänden 14 des Gehäuses 13 gehaltert. Zur Lagerung des jeweiligen Tragarms 22 an einer der Seitenwände 14 bildet der jeweilige Tragarm 22 an dem der Umlenkwelle 23 abgewandten Ende 29 eine in Fig. 3 näher dargestellte Lasche 26 aus. Innerhalb einer durch die Lasche 26 ausgebildeten Aussparung 27 des jeweiligen Tragarms 22 ist jeweils ein als Gelenkauge 28 ausgebildetes Lager zur Halterung des jeweiligen Tragarms 22 an dem Gehäuse 13 bzw. einer der Seitenwände 14 des Gehäuses 13 angeordnet.

Hier und vorzugsweise umfasst das jeweilige Gelenkauge 28 einen Innenring 30 und einen Außenring 31. Eine Außenfläche 32 des Innenrings 30 und eine Innenfläche 33 des Außenrings 31 sind kugelförmig ausgebildet. Die Außenfläche 32 und die Innenfläche 33 bilden aufeinander gleitende Gleitflächen aus. Mithin bildet das Gelenkauge 28 ein Gleitlager aus. Dadurch, dass die Innenfläche 33 und die Außenfläche 32 kugelförmig ausgebildet sind, ist neben einer Drehbewegung um eine Drehachse 34, zu der sich der Innenring 30 konzentrisch erstreckt, zusätzlich der Außenring 31 relativ zu den Innenring 30 um eine orthogonal auf der Drehachse 34 stehende Kippachse 35 verschwenkbeweglich.

Hierdurch wird verhindert, dass bei einer ungleichmäßigen Erntegutzufuhr am Zuführende 9 des Schrägförderers 2, wobei die Umlenkwelle 23 einseitig in vertikaler Richtung ansteigt, Verspannungen, insbesondere in den Lagern 25 oder den Tragarmen 22 auftreten. Ein ungleichmäßiges Aufsteigen oder Absenken der Umlenkwelle 23 in vertikaler Richtung 36 wird somit durch das dem jeweiligen Tragarm 22 zugeordnete Gelenkaugen 28 ausgeglichen. Zur Halterung des jeweiligen Gelenkauges 28 in der jeweiligen Lasche 26, ist der Außenring 31 des jeweiligen Gelenkauges 28 beidseitig mittels jeweils eines Sicherungsrings 37 in der Aussparung 27 der jeweiligen Lasche 26 festgesetzt. Hier und vorzugsweise ist der Innenring 30 des jeweiligen Gelenkauges 28 auf einem jeweiligen Bolzen 38 (schematisch in Fig. 1 angedeutet) angeordnet, wobei der jeweilige Bolzen 38 an einer der Seitenwände 14 angeordnet ist.

### Bezugszeichenliste:

| | | | |
|---|---|---|---|
| 1 | Erntemaschine | 34 | Drehachse |
| 2 | Schrägförderer | 35 | Kippachse |
| 3 | Umlenkrollen | 36 | Vertikale Richtung |
| 4 | Antriebsrolle | 37 | Sicherungsring |
| 5 | Zugmittel | 38 | Bolzen |
| 6 | Vorsatzgerät | | |
| 7 | Dreschwerk | | |
| 8 | Erntegut | | |
| 9 | Zuführende | | |
| 10 | Abgabeende | | |
| 11 | Antriebsachse | | |
| 12 | Umlenkachse | | |
| 13 | Gehäuse | | |
| 14 | Seitenwand | | |
| 15 | Gehäuseunterwand | | |
| 16 | Gehäuseoberwand | | |
| 17 | Innenraum | | |
| 18 | Förderleisten | | |
| 19 | Drehrichtung | | |
| 20 | Förderrichtung | | |
| 21 | Antriebswelle | | |
| 22 | Tragarme | | |
| 23 | Umlenkwelle | | |
| 24 | Ende | | |
| 25 | Lager | | |
| 26 | Lasche | | |
| 27 | Aussparung | | |
| 28 | Gelenkauge | | |
| 29 | Ende | | |
| 30 | Innenring | | |
| 31 | Außenring | | |
| 32 | Außenfläche | | |
| 33 | Innenfläche | | |

## Patentansprüche

1. Schrägförderer (2) für eine selbstfahrende Erntemaschine (1) mit zumindest zwei vorderen Umlenkrollen (3) und zumindest zwei hinteren Antriebsrollen (4), um welche zumindest zwei parallel verlaufende Zugmittel (5) endlos umlaufen, zwischen denen sich entlang der Länge der Zugmittel (5) verteilte Förderleisten (18) erstrecken,
wobei die vorderen Umlenkrollen (3) auf einer Umlenkwelle (23) und die hinteren Antriebsrollen (4) auf einer Antriebswelle (21) angeordnet sind,
wobei zumindest die Umlenkwelle (23) an dessen äußeren Enden (24) jeweils an einem Tragarm (22) gelagert ist,
**dadurch gekennzeichnet, dass**
der jeweilige Tragarm (22) an einem der Umlenkwelle (23) abgewandten Ende (29) mittels jeweils eines Gelenkauges (28) gelagert ist.

2. Schrägförderer (2) nach Anspruch 1, **dadurch gekennzeichnet, dass** das jeweilige Gelenkauge (28) einen Innenring (30) und einen Außenring (31) umfasst, wobei eine Außenfläche (32) des Innenrings (30) und eine Innenfläche (33) des Außenrings (31) kugelförmig ausgebildet sind und aufeinander gleitende Gleitflächen ausbilden.

3. Schrägförderer (2) nach einem der Ansprüche 1 oder 2, **dadurch gekennzeichnet, dass** der jeweilige Tragarm (22) an dem der Umlenkwelle (23) abgewandten Ende (29) eine Lasche (26) ausbildet, wobei die Lasche (26) eine Aussparung (27) umfasst, wobei in der Aussparung (27) der Außenring (31) des jeweiligen Gelenkauges (28) gehaltert ist.

4. Schrägförderer (2) nach einem der Ansprüche 1 bis 3, **dadurch gekennzeichnet, dass** der Schrägförderer (2) ein Gehäuse (13) mit einander gegenüberliegenden Seitenwänden (14) umfasst, wobei die jeweiligen Tragarme (22) mittels des jeweiligen Gelenkauges (28) an den Seitenwänden (14) angeordnet sind, wobei vorzugsweise jeweils ein Bolzen (38) ortsfest an der jeweiligen Seitenwand (14) angeordnet ist und der Innenring (30) des jeweiligen Gelenkauges (28) auf einem der jeweiligen Bolzen (38) angeordnet ist.

5. Schrägförderer (2) nach einem der Ansprüche 1 bis 4, **dadurch gekennzeichnet, dass** die Umlenkwelle (23) jeweils mittels eines Rillenkugellagers (25) an dem jeweiligen Tragarm (22) gelagert ist.

6. Schrägförderer (2) nach einem der Ansprüche 1 bis 5, **dadurch gekennzeichnet, dass** radial außenseitig auf der Umlenkwelle (23) zumindest vier Umlenkrollen (3) zum Umlenken der Zugmittel (5) angeordnet sind und radial außenseitig auf der Antriebswelle (21) zumindest vier Antriebsrollen (4) angeordnet sind.

7. Schrägförderer (2) nach einem der Ansprüche 1 bis 6, **dadurch gekennzeichnet, dass** die Zugmittel (5) als Ketten oder Riemen ausgeführt sind.
